# EUROPÄISCHE PATENTSCHRIFT

(11) **EP 2 287 477 B1**
(45) Veröffentlichungstag und Bekanntmachung des Hinweises auf die Patenterteilung: **10.02.2016**
(21) Anmeldenummer: 09010705.3
(22) Anmeldetag: 20.08.2009
(51) Int. Cl.: F16B 39/24, F16B 43/00

(54) **Sicherungsscheibe**
Locking washer
Vitre de sécurité

(43) Veröffentlichungstag der Anmeldung: 23.02.2011
(73) Patentinhaber: Teckentrup GmbH & Co. KG, 58849 Herscheid (DE)
(72) Erfinder: Volborth, Thomas, 58553 Halver (DE)
(74) Vertreter: Patentanwälte Dörner & Kötter PartG mbB

(56) Entgegenhaltungen:
- EP-A2- 0 905 393
- DE-A1- 1 400 872
- DE-C1- 4 406 270
- FR-A- 779 361
- US-A- 3 313 552

## Beschreibung

Die Erfindung betrifft eine Sicherungsscheibe zur Anordnung auf eine ebene Unterlage nach dem Oberbegriff des Patentanspruchs 1.

Derartige Sicherungsscheiben haben die Aufgabe, Lockerungsvorgängen bei Schraubverbindungen entgegenzuwirken. Derartige Lockerungsvorgänge resultieren aus Vorspannkraftverlusten in den Schraubverbindungen, welche als Folge von Setz- und/oder Kriechvorgängen bei den miteinander verschraubten Teilen auftreten.

Um Lockerungsvorgänge zu vermeiden, müssen die Sicherungsscheiben über einen bestimmten Federweg eine ausreichende Federkraft aufweisen, die einen durch die Setz- und/oder Kriechvorgänge hervorgerufenen Vorspannkraftverlust soweit ausgleichen kann, dass die für die Betriebssicherheit der Schraubenverbindung erforderliche Klemmkraft erhalten bleibt.

Zur Erzielung einer ausreichenden Federkraft über einen bestimmten Federweg sind bereits verschiedenste Scheibenkonstruktionen vorgeschlagen worden; die einfachste Scheibenkonstruktion dieser Art stellt die Spannscheibe nach DIN 6796 dar. Bei dieser bekannten Konstruktion geht die Fläche des äußeren Ringabschnitts bei gleicher Stärke des Scheibenkörpers unmittelbar ohne erkennbare Unterteilung in die Fläche des inneren Ringabschnitts über. Eine gattungsgemäße Sicherungsscheibe ist in der DE 4406270 C1 offenbart.

Eine weitere Scheibenkonstruktion offenbart beispielweise die DE-B 2061297. Bei dieser Konstruktion ist die Scheibenunterseite durch eine Stufe in die Fläche des äußeren Ringabschnitts und die Fläche des inneren Ringabschnitts unterteilt. Beim Anziehen der Schraubverbindung wird deshalb zuerst die Fläche des äußeren Ringabschnitts auf die Unterlage gepresst, woraus eine Anfangsfederkraft mit bestimmtem Federweg resultiert. Beim weiteren Anziehen folgt dann die Krafteihleitung über die relativ steife Stufe, wodurch sich eine relativ hohe Federkraft bei sehr geringem Federweg ergibt. Auf Grund der Hebelwirkung der Stufe besteht jedoch die Gefahr, dass sich bei einem weiteren Anziehvorgang die Außenkante der Fläche des äußeren Ringabschnitts von der Unterlage abhebt, sodass schließlich die gesamte Belastung lediglich im Stufenbereich liegt. Dieser Bereich ist deshalb auch am meisten belastet. Scheibenkonstruktionen dieser Art eignen sich deshalb lediglich für solche Sicherungsaufgaben, die im Bereich der Auflage unter der Stufe relativ hohen spezifischen Flächenpressungen ausgesetzt werden dürfen.

Eine weitere Scheibenkonstruktion offenbart die DE-A 40 25 146. Bei dieser bekannten Konstruktion geht die Fläche des äußeren Ringabschnitts stetig, d.h. ohne Stufe oder dergleichen in die Fläche des inneren Ringabschnitts über. Der Übergangsbereich hat bei dieser Scheibenkonstruktion jedoch einen geringeren Querschnitt als der übrige Bereich des Scheibenkörpers. Dieser geringere Querschnitt im Übergangsbereich wird durch eine auf der Scheibenoberseite angeordnete umlaufende Rinne erzielt. Auf Grund dieser umlaufenden Rinne auf der Scheibenoberseite haben die Scheibenkonstruktionen dieser Art insbesondere bei geringer Stärke des Scheibenkörpers und zu hoher Anzugskraft die Tendenz zu "klaffen", d.h. die Neigung im Bereich der Außenkante oder der Fläche des äußeren Ringabschnitts abzuheben. Dieses "Klaffen" kann bei derartigen Scheibenkonstruktionen in seinen Auswirkungen dadurch reduziert werden, dass der die Fläche des äußeren Ringabschnitts aufweisende Teil des Scheibenkörpers relativ großflächig ausgebildet wird. Dies bedeutet, dass Scheibenkonstruktionen dieser Art ihre volle Sicherungswirkung insbesondere bei großem Außendurchmesser erzeugen. Weitere Scheiben sind in der FR 779 361 A, der DE 1400 872 A1 sowie der US 3 313 552 A offenbart.

Aufgabe der vorliegenden Erfindung ist es, eine Sicherungsscheibe der vorgenannten Art zu schaffen, die unter geringem Materialeinsatz einfach herstellbar ist und dabei gute Sicherungseigenschaften aufweist. Gemäß der Erfindung wird diese Aufgabe durch die Merkmale des kennzeichnenden Teils des Patentanspruchs 1 gelöst.

Mit der Erfindung ist eine Sicherungsscheibe geschaffen, die unter geringem Materialeinsatz einfach herstellbar ist und welche gute Sicherungseigenschaften aufweist. Bei der erfindungsgemäßen Scheibe wirkt die Anstellkraft in einem steileren Winkel zur ebenen Unterlage, das heißt die Kraftkomponente in senkrechter Richtung ist höher als die Kraftkomponente in horizontaler Richtung. Dadurch wird die Außenkante der Fläche des äußeren Ringabschnitts beim Anziehen der Schraube stärker in die ebene Unterlage gepresst, wodurch eine verbesserte Sicherungswirkung erzielt ist. Darüber hinaus kann der Außendurchmesser der Scheibe bei hoher Sicherungswirkung relativ klein gehalten werden.

Auf der Scheibenunterseite ist zwischen den Ringabschnittsflächen eine umlaufende Rinne eingebracht, welche die beiden Ringabschnittsflächen zueinander begrenzt, wodurch die Federeigenschaften der Scheibe verbessert sind. Vorteilhaft kann zusätzlich auf der Scheibenoberseite eine umlaufende Rinne eingebracht sein, die parallel zu der auf der Unterseite angeordneten Rinne verläuft.

In Weiterbildung der Erfindung beträgt der spitze Winkel zwischen der äußeren Ringabschnittsfläche und der Unterlage im unverspannten Zustand zwischen 10 Grad und 20 Grad, vorzugsweise zwischen 12 Grad und 15 Grad. Diese Werte liefern gute Feder- und Sicherungseigenschaften der Scheibe. Bevorzugt beträgt der spitze Winkel zwischen der inneren Ringabschnittsfläche und der Unterlage im unverspannten Zustand zwischen 3 Grad und 15 Grad, vorzugsweise zwischen 5 Grad und 10 Grad.

In Ausgestaltung der Erfindung weist die der Unterlage abgewandte Scheibenoberseite eine Profilierung auf. Hierdurch wird eine verbesserte Sicherungswirkung erzielt. Diese Profilierung kann sich auf den Innenringbereich beschränken und beispielsweise in Form einer Riffelung ausgestaltet sein. Die Profilierung kann auch als Rändel- oder Kreuzrändelprofilierung oder in anderer Weise ausgebildet sein. Gute Ergebnisse wurden bei Einbringung einer Profilierung als V- oder S-Profilierung erzielt.

In weiterer Ausgestaltung der Erfindung ist die Außenkante der äußeren Ringabschnittsfläche scharfkantig ausgebildet. Hierdurch ist ein Eingraben der Außenringfläche in die Unterlage unterstützt.

Das Verhältnis der äußeren Ringabschnittsfläche zur inneren Ringabschnittsfläche ist grundsätzlich frei wählbar und kann durch Versuche dem jeweiligen Anwendungszweck angepasst werden. Optimale Verhältnisse für einen Großteil der Anwendungsbereiche sind jedoch dann gegeben, wenn sich das Verhältnis der äußeren Ringabschnittsfläche zur inneren Ringabschnittsfläche etwa wie 3 : 1 verhält.

Zur Erzielung der gewünschten Sicherungseigenschaften ist es prinzipiell ausreichend, die Scheibenoberseite eben auszubilden. Im Bedarfsfall kann die Scheibenoberseite jedoch auch mit einer Wölbung ausgestattet sein. Besonders gute Ergebnisse werden mit einer konkaven Wölbung erzielt.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: eine Sicherungsscheibe am Beispiel einer Schraubensicherung, wobei die linke Seite der Figur die Sicherungsscheibe im unverspannten Zustand und die rechte Seite der Figur die Sicherungsscheibe in verspanntem Zustand zeigt;
- Figur 2: die Darstellung einer Sicherungsscheibe im Schnitt (in unverspanntem Zustand) und
- Figur 3: die Sicherungsscheibe aus Figur 1 in der Draufsicht.

Die als Ausführungsbeispiel gewählte Sicherungsscheibe ist aus C60 Federstahl hergestellt und umfasst einen im Wesentlichen ringförmig ausgebildeten Scheibenkörper, mit einer Scheibenoberseite 6 und einer Scheibenunterseite 1. Die Scheibenunterseite 1 ist in zwei Ringabschnittsflächen 2, 3 unterteilt, einer äußeren Ringabschnittsfläche 2 und einer inneren Ringabschnittsfläche 3. Die beiden Ringabschnittsflächen sind durch eine zwischen diesen umlaufend verlaufende, in die Scheibenunterseite 1 eingebrachte Rinne 8 zueinander begrenzt.

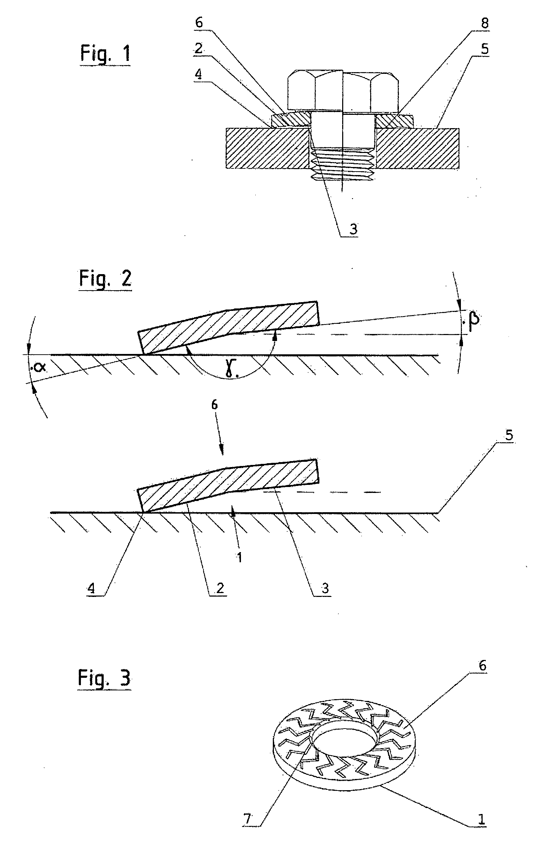

Die Sicherungsscheibe ist derart gestaltet, dass sie im unverspannten Zustand mit der Außenkante 4 ihrer äußeren Ringabschnittsfläche 2 auf einer ebenen Unterlage 5 aufliegt. Dabei schließt die äußere Ringabschnittsfläche 2 mit einer ebenen Unterlage 5 im unverspannten Zustand einen Winkel α und die innere Ringabschnittsfläche 3 mit der ebenen Unterlage 5 einen Winkel β ein (vgl. Fig. 2). Die Winkel α, β sind dabei als spitze Winkel ausgeführt, wobei der Winkel β stets einen kleineren Wert aufweist, als der Winkel α. Im Ausführungsbeispiel beträgt der Winkel α 14 Grad und der Winkel β 6 Grad. Die Außenkante 4 der äußeren Ringabschnittsfläche 2 ist scharfkantig ausgebildet. Hierdurch gräbt sie sich in verspanntem Zustand stärker in die ebene Unterlage 5 ein.

Im Ausführungsbeispiel ist die äußere Ringabschnittsfläche 2 nach innen gewölbt ausgeführt, wodurch zwei parallel zueinander angeordnete, ringförmige Schneidkanten gebildet sind, weiche sich bei Verspannung der Scheibe in die Fläche der Unterlage 5 eingraben, wie dies aus der rechten Seite der Figur 1 erkennbar ist. Die innere Ringabschnittsfläche 3 ist dabei eben ausgebildet.

Auf ihrer der Unterlage 5 abgewandten Oberseite 6 ist die Sicherungsscheibe gewölbt ausgebildet und weist eine umlaufende Profilierung 7 auf. Die Profilierung ist im Ausführungsbeispiel in Art einer S-Profilierung ausgeführt (vgl. Fig. 3). Andere Ausgestaltungen wie beispielsweise Zickzack- oder Wellenprofilierungen sind gleichfalls einsetzbar.

## Patentansprüche

1. Sicherungsscheibe zur Anordnung auf eine ebene Unterlage (5), umfassend einen ringförmigen Scheibenkörper, an dessen der Unterlage (5) zugewandten Unterseite (1) eine äußere und eine innere Ringabschnittsfläche (2, 3) winklig zueinander angeordnet sind, wobei die Außenkante (4) der äußeren Ringabschniftsfläche (2) in unverspanntem Zustand der Scheibe auf der Unterlage (5) aufliegt und wobei beide Ringabschnittsflächen (2, 3) mit der Unterlage (5) jeweils einen spitzen Winkel einschließen, und wobei die äußere Ringabschnittsfläche (2) nach innen gewölbt ausgebildet ist, wobei zwei parallel zueinander ausgebildete, ringförmige Schneidkanten gebildet sind, die sich bei Verspannung der Sicherungsscheibe in die Fläche der Unterlage (5) eingraben, wobei die beiden Ringabschnittsflächen (2, 3) durch eine zwischen diesen umlaufend verlaufende, in die Scheibenunterseite (1) eingebrachte Rinne (8) zueinander begrenzt sind, **dadurch gekennzeichnet, dass** der zwischen der äußeren Ringabschnittsfläche (2) mit der Unterlage (5) gebildete Winkel α größer ist, als der zwischen der inneren Ringabschnittsfläche (3) und der Unterlage (5) gebildete Winkel β.

2. Scheibe nach Anspruch 1, **dadurch gekennzeichnet, dass** der spitze Winkel α zwischen der äußeren Ringabschnittsfläche (2) und der Unterlage (5) im unverspannten Zustand zwischen 10° und 20°, vorzugsweise zwischen 12° und 15° beträgt.

3. Scheibe nach Anspruch 1 oder 2, **dadurch gekennzeichnet, dass** der spitze Winkel β zwischen der inneren Ringabschnittsfläche (3) und der Unterlage (5) im unverspannten Zustand zwischen 3° und 15°, vorzugsweise zwischen 5° und 10° beträgt.

4. Scheibe nach einem der vorgenannten Ansprüche, **dadurch gekennzeichnet, dass** die der Unterlage (5) abgewandte Scheibenoberseite (6) eine Profilierung (7) aufweist.

5. Scheibe nach Anspruch 4, **dadurch gekennzeichnet, dass** die Profilierung (7) als V- oder S-Profilierung ausgebildet ist.

6. Scheibe nach einem der vorgenannten Ansprüche, **dadurch gekennzeichnet, dass** die Außenkante (4) der äußeren Ringabschnittsfläche (2) scharfkantig ausgebildet ist.

7. Scheibe nach einem der vorgenannten Ansprüche, **dadurch gekennzeichnet, dass** der der ebenen Unterlage (5) zugewandte Winkel γ zwischen den beiden Ringabschnittsflächen (2, 3) ein stumpfer Winkel ist.

8. Scheibe nach einem der vorgenannten Ansprüche, **dadurch gekennzeichnet, dass** der spitze Winkel β zwischen der inneren Ringabschnittsfläche (3) und der ebenen Unterlage (5) im unverspannten Zustand etwa halb so groß ist, wie der spitze Winkel α zwischen der äußeren Ringabschnittsfläche (2) und der ebenen Unterlage (5).

9. Scheibe nach einem der vorgenannten Ansprüche, **dadurch gekennzeichnet, dass** auf der Scheibenoberseite (6) eine umlaufende Rinne eingebracht ist, die parallel zu der auf der Scheibenunterseite (1) angeordneten Rinne (8) verläuft.

10. Scheibe nach einem der vorgenannten Ansprüche, **dadurch gekennzeichnet, dass** die innere Ringabschnittsfläche (3) gewölbt ausgebildet ist.

11. Scheibe nach einem der vorgenannten Ansprüche, **dadurch gekennzeichnet, dass** das Verhältnis von äußerer Ringabschnittsfläche (2) zu innerer Ringsabschnittfläche (3) 3 : 1 beträgt.

12. Scheibe nach einem der vorgenannten Ansprüche, **dadurch gekennzeichnet, dass** die Scheibenoberseite (6) eine Wölbung aufweist.

13. Scheibe nach Anspruch 12, **dadurch gekennzeichnet, dass** die Wölbung konkav ausgebildet ist.

## Claims

1. Locking washer to be arranged on a flat base (5) comprising an annular washer body to whose underside (1) facing the base (5) an outer and an inner annular section surface (2, 3) are arranged at an angle, wherein the outer edge (4) of the outer annular section surface (2) rests on the base (5) in an unbraced condition of the washer and wherein the two annular section surfaces (2, 3) respectively form a sharp angle with the base (5) and wherein the outer annular section surface (2) is curved inward, wherein two parallel annular cutting edges are formed, which dig in the surface of the base (5) when the locking washer is braced, wherein the two annular section surfaces (2, 3) are limited to one another by a groove (8) running circumferentially between them inserted in the underside (1) of the washer, **characterised in that** the angle α formed between the outer annular section surface (2) and the base (5) is greater than the angle β formed between the inner annular section surface (3) and the base (5).

2. Washer according to claim 1, **characterised in that** the sharp angle α between the outer annular section surface (2) and the base (5) in an unbraced condition is between 10° and 20°, preferably between 12° and 15°.

3. Washer according to claim 1 or 2, **characterised in that** the sharp angle β between the inner annular section surface (3) and the base (5) in an unbraced condition is between 3° and 15°, preferably between 5° and 10°.

4. Washer according to one of the previous claims, **characterised in that** the top side (6) of the washer facing away from the base (5) has a profiling (7).

5. Washer according to claim 4, **characterised in that** the profiling (7) is designed as a V- or S-profiling.

6. Washer according to one of the previous claims, **characterised in that** the outer edge (4) of the outer annular section surface (2) is sharp-edged.

7. Washer according to one of the previous claims, **characterised in that** the angle γ facing the flat base (5) between the two annular section surfaces (2, 3) is an obtuse angle.

8. Washer according to one of the previous claims, **characterised in that** the sharp angle β between the inner annular section surface (3) and the flat surface (5) in an unbraced condition is approximately half the size of the sharp angle α between the outer annular section surface (2) and the flat base (5).

9. Washer according to one of the previous claims, **characterised in that** a circumferential groove is inserted on the top side (6) of the washer, which runs parallel to the groove (8) arranged on the underside (1) of the washer.

10. Washer according to one of the previous claims, **characterised in that** the inner annular section surface (3) is arched.

11. Washer according to one of the previous claims, **characterised in that** the ratio of the outer annular section surface (2) to the inner annular section surface (3) is 3:1.

12. Washer according to one of the previous claims, **characterised in that** the top side (6) of the washer has a curvature.

13. Washer according to claim 12, **characterised in that** the curvature is concave.

## Revendications

1. Vitre de sécurité pour agencement sur une garniture (5) plane, comprenant un corps de vitre de forme annulaire contre le côté inférieur (1) duquel regardant la garniture (5) sont agencées, en formant réciproquement un angle, une surface extérieure et une surface intérieure (2, 3) de segment annulaire, sachant que l'arête extérieure (4) de la surface extérieure (2) de segment annulaire applique sur la garniture (5) lorsque la vitre se trouve à l'état non serré, et sachant que les deux surfaces (2, 3) de segment annulaire englobent avec la garniture (5) chacune un angle aigu, et sachant que la surface extérieure (2) de segment annulaire est configurée incurvée vers l'intérieur, sachant que sont formées deux arêtes de coupe annulaires configurées réciproquement parallèles, arêtes qui, lors du serrage de la vitre de sécurité, s'enfoncent dans la surface de la garniture (5), sachant que les deux surfaces (2, 3) de segment annulaire sont délimitées l'une par rapport à l'autre par une gorge (8) ménagée contre le côté inférieur (1) de la vitre et présentant un tracé circulaire entre ces surfaces, **caractérisée en ce que** l'angle α formé entre la surface extérieure (2) de segment annulaire et la garniture (5) est plus grand que l'angle β formé entre la surface intérieure (3) de segment annulaire et la surface support (5).

2. Vitre selon la revendication 1, **caractérisée en ce que** l'angle aigu α formé entre la surface extérieure (2) de segment annulaire et la garniture (5) est compris, à l'état non serré, entre 10° et 20°, de préférence entre 12° et 15°.

3. Vitre selon la revendication 1 ou 2, **caractérisée en ce que** l'angle aigu β formé entre la surface intérieure (3) de segment annulaire et la garniture (5) est compris, à l'état non serré, entre 3° et 15°, et de préférence entre 5° et 10°.

4. Vitre selon l'une des revendications précédentes, **caractérisée en ce que** le dessus (6) de la vitre ne regardant pas la garniture (5) présente une géométrie profilée (7).

5. Vitre selon la revendication 4, **caractérisée en ce que** la géométrie profilée (7) est configurée profilée en V ou en S.

6. Vitre selon l'une des revendications précédentes, **caractérisée en ce que** le bord extérieur (4) de la surface extérieure (2) de segment annulaire présente une arête vive.

7. Vitre selon l'une des revendications précédentes, **caractérisée en ce que** l'angle Y regardant la garniture (5) plane entre les deux surfaces (2, 3) de segment annulaire est un angle obtus.

8. Vitre selon l'une des revendications précédentes, **caractérisée en ce que** l'angle aigu β entre la surface intérieure (3) de segment annulaire et la garniture (5) plane est, à l'état non serré, approximativement moitié moins grande que l'angle aigu α entre la surface extérieure (2) de segment annuaire et la garniture plane (5).

9. Vitre selon l'une des revendications précédentes, **caractérisée en ce que** sur le côté supérieur (6) de la vitre a été ménagée une gorge périmétrique dont le tracé est parallèle à la gorge (8) agencée sur le côté inférieur (1) de la vitre.

10. Vitre selon l'une des revendications précédentes, **caractérisée en ce que** la surface intérieure (3) de segment annulaire est configurée incurvée.

11. Vitre selon l'une des revendications précédentes, **caractérisée en ce que** la proportion entre la surface extérieure (2) de segment annulaire et la surface intérieure (3) de segment annulaire s'élève à 3:1.

12. Vitre selon l'une des revendications précédentes, **caractérisée en ce que** le côté supérieur (6) de la vitre présente une courbure.

13. Vitre selon la revendication 12, **caractérisée en ce que** la courbure est configurée convexe.
